(19) **Europäisches Patentamt / European Patent Office / Office européen des brevets**

(11) **EP 2 757 306 A1**

(12) ## EUROPEAN PATENT APPLICATION
published in accordance with Art. 153(4) EPC

(43) Date of publication:
**23.07.2014 Bulletin 2014/30**

(51) Int Cl.:
*F17D 5/08* [(2006.01)]

(21) Application number: **12792498.3**

(86) International application number:
**PCT/BR2012/000166**

(22) Date of filing: **28.05.2012**

(87) International publication number:
**WO 2012/162775 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2011 BR PI1102062**

(71) Applicant: **Instituto de Pesquisas Tecnológicas Do Estado De São Paulo**
**05508-901 São Paulo (BR)**

(72) Inventors:
• **PANOSSIAN, Zehbour**
**05542-120 São Paulo - SP (BR)**
• **ABUD FILHO, Sérgio Eduardo**
**01504-000 São Paulo - SP (BR)**
• **ALMEIDA, Neusvaldo Lira de**
**05542-120 São Paulo - SP (BR)**
• **PEREIRA FILHO, Mário Leite**
**05338-000 São Paulo - SP (BR)**
• **SILVA, Diogo de Lima e**
**06243-280 Osasco - SP (BR)**

(74) Representative: **Geurts, Franciscus Antonius**
**Octrooibureau Vriesendorp & Gaade B.V.**
**Dr. Kuyperstraat 6**
**2514 BB Den Haag (NL)**

(54) **METHOD AND EQUIPMENT FOR IDENTIFYING AND MEASURING ALTERNATING CURRENT INTERFERENCE IN BURIED DUCTS**

(57)      This invention, which pertains to the field of testing of the corrosion-resistance of materials, includes devices (a probe formed by a permanent reference electrode with corrosion coupons and an electronic switch) and a measurement method for evaluating the probability of corrosion of buried ducts due to alternating current (AC), and aims at providing a methodology that eliminates ohmic losses and allows the desired measurement to be obtained. For that purpose, a probe formed by a permanent copper or copper sulphate reference electrode (ECSC) with four corrosion coupons was developed, and an electronic switch which was also developed within the scope of this invention is coupled to this probe. This assembly (probe and switch), associated with a preferably portable digital oscilloscope or a data acquisition device with digital signal processing (DSP), makes it possible to obtain the waveform of the pipe/ground potential AC + DC *off*, and hence the peak potential of this waveform, this value being used to predict the corrosion of buried, cathode-protected ducts due to alternating current, on the basis of the criterion that corrosion due to alternating current will not occur or will be insignificant if the peak of the waveform of the pipe/ground potential AC + DC *off* is more negative than - 0,85 $V_{Ecsc}$. The present invention can also be directly used for monitoring external corrosion of ground ducts and to verify the real cathode protection potential of these ducts. In order to ensure the integrity of the ducts, this equipment can be installed at test points, at valve boxes and cathode protection rectifiers, as well as in zones where corrosion is suspected

Figure 4

**Description**

The present invention relates to the research sector of the resistance of materials to corrosion, presents devices (probe consists of a permanent reference electrode with corrosion coupons and an electronic switcher) and measurement procedure to assess the probability of corrosion occur by alternating current (AC) of buried ducts, aiming to establish a methodology that eliminates the ohmic drop and thus allows achieving the desired measure.

For this purpose, it was developed a probe consisting of a permanent reference electrode of copper / copper sulfate (ECSC) and four corrosion coupons, and this probe was coupled to an electronic switching device, also developed in the scope of this invention. This set (probe + switching device) associated with a digital oscilloscope or a data acquisition device with digital signal processing (DSP - digital signal processing), preferably portable, allows obtaining the waveform of potential pipe / soil AC + DC off and the consequent obtainment of peak potential of this wave form, this value being used to predict the occurrence of corrosion by alternating current of buried ducts and cathodically protected, using the criterion that the corrosion by AC current will not occur or will be negligible if the peak potential of the waveform of the potential pipe / soil AC + DC off is more negative than - 0.85 $V_{ECSC}$.

The present invention is also applicable directly to monitoring the external corrosion of onshore ducts and verification the current potential of cathodic protection of these ducts. To ensure the integrity of the ducts, such equipment may be installed in test points, valve boxes and cathodic protection rectifiers, as well as in areas of suspected corrosion.

STATE OF THE ART

Metallic ducts are widely used in conducting fluids, especially oil and gas. Ducts are generally buried and protected externally by coatings of various thicknesses and basic mechanism of protection is a barrier between the metal and the corrosive medium. As good as the coating, the absence of faults cannot be guaranteed, either generated at transportation, during installation or in use. These failures, because the constituent metal duct stay in direct contact with the soil, the corrosion process is established and, for this reason, we adopt the cathodic protection as a complementary technique to the external anticorrosive coatings.

Corrosion cases generated by electrical interference currents have been known for many years. These currents may be alternating or continuous nature. The currents of continuous nature (DC) may be the result of interference between ducts due to cathodic protection systems of the companies and resulting from interference from the subway network that sometimes crosses the regions of duct installation. The alternating current (CA) are generated in Brazil, from interference lines of high voltage transmission in ducts or system for distribution of electricity or from the cathodic protection system itself. Either the direct or the alternating nature can accelerate corrosion process and shorten the lifetime of the duct. Outside, there is another source of interference which are the trains at high-speed that operate on alternating current system.

In general, the interference of alternating currents cause corrosion processes more pronounced when the ducts are with low levels of cathodic protection and subject to high levels of alternating current, are covered with coatings of good quality and low thickness and are slightly buried in little resistive soil. Although many previous studies have already been carried out in the literature there is no consensus regarding the mechanisms involving corrosion by AC current nor secure criteria to point out that the interference of the AC current on corrosion of buried ducts and cathodically protected. A critical analysis of the information gathered in the literature shows that the measurements performed in the field do not take into account the coupling of DC current of cathodic protection with interference AC current, the measurements being related individually to the AC or DC current and further, the criteria were based on kinetic and not thermodynamic parameters.

Probes are sold in the market built with reference electrodes and coupon corrosion, these probes are called permanent reference electrodes. The coupon of corrosion of these probes is electrically connected to the duct at the test points (PTE), being used to estimate corrosion rates. The reference electrode is used to monitor the potential pipe / soil for cathodic protection. In general, these probes remain buried for long periods. In practice, there are measurement errors in the course of time due to the diffusion of copper ions crossing the porous plate of the reference electrode and are directed to the coupon corrosion, causing contamination. These ions end up depositing on the steel surface (cathodically polarized). This deposition is responsible for the passivation of the coupon.

SUMMARY OF THE INVENTION

Because of these shortcomings, the present invention has been developed based on a methodology that takes into account the coupling of AC current plus DC current, thermodynamic parameters and the theoretical concepts of corrosion of carbon steel in aqueous media, analyzing the nature of the reactions involved in this corrosion and the influence of pH values established at the interface metal / electrolyte. With this, we proposed the mechanism responsible for AC corrosion and a safer criterion for checking presence or absence of the influence of AC corrosion. Moreover, a procedure was developed with the use of equipment with suitable devices, probe and coupons for carrying out measures not previously performed in field: effective AC, DC potential, the potential of coupling of AC and DC currents, waveform of AC and DC coupling, potential of AC and DC peak (obtained from the waveform), harmonic content of the wave form of potential, AC and DC current.

As a premise, the corrosion by AC current is due to the oscillation of the interphase potential duct / soil, depending on the pH value at their neighborhoods, alternately takes the system to the field of corrosion and immunity or alternatively the field of passivation and immunity. Accordingly, the corrosion of carbon steel occurs because of the irreversibility of the reaction of iron corrosion in cases of limited alkalinization, and the impossibility of formation of a protective passive layer due to the fluctuation between the state of corrosion and passivity, in cases markedly alkalinization. Citing that the condition of moderate alkalinization is more aggressive because the fluctuation between the state of corrosion and corrosion immunity causes more intense than the fluctuation between the passivation state and immunity.

As a criterion for verifying the occurrence of interference by AC current in buried and cathodically protected ducts, it was carried out the obtaining of the waveform of the AC and DC coupling potential and comparison of the peak potential of this waveform with the established potential was performed as acceptable limit of cathodic protection, which is traditionally -0.85 $V_{ECSC}$. This proposition, made based on thermodynamics ensures that the forecast is safely used.

Despite the suitability of the proposed criteria, in practice, essays in the field showed clearly that the values of potential pipe / soil measured in the field are strongly influenced by the ohmic drop, and this influence cannot be corrected by current techniques used in the field. Thus, we opted for the development of a methodology in field that allows the reading of potential duct / soil without the influence of the ohmic drop due to the movement of AC and DC currents.

Finally, it was found that none of the studies found in literature refers to the origin and nature (whether induced or caused by parasitic AC currents in the soil) of the source of alternating current. Then, it was made an investigation to identify the origin of the likely sources of interference by analyzing the harmonic content of the waveforms obtained in the field, which showed that there are portions with interference of the high voltage transmission lines and interference sections of the electricity distribution system in large urban centers.

One object of the invention is to monitor the potential pipe / soil using the same principle of reference electrodes available in the market. Thus, the first step was to develop a permanent reference electrode that does not present the problem of contamination presented by the prior art. For this, a modification was introduced in the reference electrode in order to:

- Make it a permanent reference electrode, or an electrode that can be installed in the field and stay for a long period of time without losing its functionality;
- halt the reference electrode to avoid soil contamination with copper ions, eliminating the possibility of deposition of copper on the coupon surface of the corrosion;
- use more than one coupon for more than one value of corrosion rate and, thus, to obtain an average value.

To stop the reference electrode made of copper / copper sulphate of the soil, the porous tip of the bottom of the vessel containing the solution of the traditional copper sulfate ($Cu/CuSO_4$) electrode was replaced by a titanium plate ($Cu/CuSO_4$ -Ti). To see if this substitution modified the reading of the potential, and the $Cu/CuSO_4$ and $Cu/CuSO_4$-Ti electrodes were calibrated with a standard hydrogen electrode. Then, they were used to measure the potential of the electrode of steel of the systems / aqueous solution both in the unpolarized condition (open circuit) as in the cathodic and anodic polarized condition. The reference electrode used was well developed in the field for a period of five months without any problems and the values obtained with the two electrodes were exactly the same.

Once solved the problem of contamination of the steel with copper ions, it was passed to the design of the probe having more than one corrosion coupon, and the definition of the number and arrangement of coupons must take into account the elimination of the influence of dispersed currents in the soil, inferring from the mathematical equations presented below.

DESCRIPTION OF THE FIGURES

Figure 1A - Graph of thermodynamics prediction on the occurrence of AC corrosion from the waveform of the potential pipe / soil resulting from DC and AC coupling, assuming as secure potential the value of -0.85 $V_{Cu/CuSO4}$. considering, in this case, a low level of alternating current interference.

Figure 1B - Graph of thermodynamics predicting on the occurrence of AC corrosion from the waveform of the potential pipe / soil resulting from DC and AC coupling, assuming as secure potential the value of -0.85 $V_{Cu/CuSO4}$ considering in this case a high level of interference AC. Figure 2 - Graph of dependence of the level of alkalinization of the medium and possible fluctuations of the potential of the interface metal/medium in the presence of AC curent:

A) active / immune, B) passive / immune and C) passive / active (field of ferrate) / immune.

Figure 3 - Graph of dependence of the level of alkalinization of the medium and possible fluctuations of the potential of the interface metal/medium in the presence of AC current: active / immune A), B) passive / immune and C) passive / active (field of ferrate) / immune, but with interference from AC current of small amplitude.

Figure 4 - Schematic drawing of currents entering the coupon of the corrosion probe, where 1, 2,3 and 4 represent the corrosion coupons, aimed at solving problems of alternating currents in the soil.

Figure 5 - Graph of the waveform of the potential pipe / soil on the coupling of the resulting potential of AC and DC.

Figure 6 - Bar graph of the harmonic content of the waveform of the pipe / soil potential on Figure 5 (normalized percentage relative to the fundamental component of 60 Hz)

Figure 7 - Schematic sectional indication of the upper generatrix of the ducts within the range.

Figure 8 - Schematic sectional drawing of the marking of 50 cm for the opening of the trench, from the indication of the upper generatrix of the duct.

Figure 9 - Schematic sectional drawing of the opening of the trench.

Figure 10 - Schematic sectional drawing of the arrangement of corrosion coupons of the probe relative to the duct.

Figure 11 - Schematic drawing of the installation of corrosion coupons (interconnected) cables and the reference electrode (stagnant) in Test Point

Figure 12 - Schematic drawing of the electronic switching device connected in series with the duct and the corrosion coupons.

Figure 13 - Schematic diagram of the connection of a digital oscilloscope or a data acquisition device with digital signal processing (DSP - digital signal processing) to the electronic switching device for data acquisition.

Figure 14 - Illustrative photos of the position of the keys of the electronic switching device for measurements of waveforms of the potential pipe / AC + DC on soil (Figure 14A - key ch1 down and key ch2 down) and AC + DC off (Figure 14B - key ch1 down and key ch2 up), illustrative photo of connecting terminals of buried metallic structure and the reference electrode (Figure 14C) where A = the duct interconnection, B = interconnection of the corrosion coupons and C = interconnection to the reference electrode.

Figure 15 - Graph of the waveform of the potential pipe / soil AC + DC on obtained on field

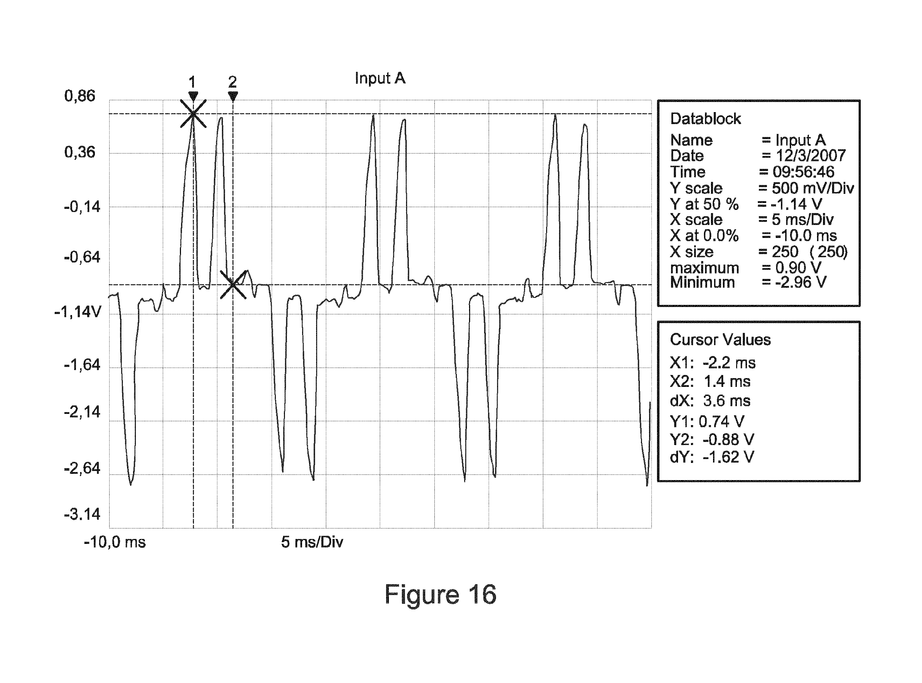

Figure 16 - Graph of the waveform of the potential pipe / soil AC + DC off.

Figure 17 - Illustrative photo of the full view of the electronic switching device.

Figure 18 - Illustrative picture of the visual aspect of the probe after removing the installation site, showing quite adherent soil around the corrosion coupons.

Figure 19 - Illustrative photo of the visual aspect of a coupon after stripping with the identification of a corrosion pitting.

Figure 20 - Illustrative photo of the cross section of a corrosion pitting.

Figure 21 - Illustrative Photo of the traditional $Cu/CuSO_4$ reference electrode. (Figure 21 A) illustrative photo of the reference electrode after replacing the porous tip for a titanium plate Cu/CuSO4-Ti (Figure 21 B) and the illustrative photo of the installed titanium plate (Figure 21 C).

Figure 22 - Graph of the expected appearance of the waveform of the potential pipe / soil off, obtained using the switching methodology of this invention.

Figure 23 - Diagram of electronic circuit (multivibrator) implementing the switching in order to obtain the potential of the waveform of the potential off of pipe / soil.

DETAILED DESCRIPTION OF THE INVENTION

As stated previously, we developed a probe consisting of a reference electrode of copper / copper sulfate (ECSC) and permanent corrosion coupons, preferably four, and this probe was coupled to the electronic switching device, also developed in the context of this invention.

In the market, there are marketed probes constructed with reference electrodes and a corrosion coupon are called permanent reference electrodes. The corrosion coupon of these probes is electrically connected to the duct in test points (PTE), and it was used to estimate corrosion rates, and the reference electrode to monitor the pipe / soil potential for cathodic protection. In general, these probes remain buried for long periods, and in practice measure errors occur as time passes. Studies have shown that these errors are due to the passivation of the corrosion coupon due to the diffusion of copper ions crossing the porous plate of the reference electrode and are directed to the corrosion coupon. These ions end up depositing on the steel surface (cathodically polarized) and this deposition is responsible for the passivation of the coupon. For this reason, the porous tip of the reference electrode in this invention was replaced by a metal base made of titanium 99.9 % in order to prevent the diffusion of $Cu^{2+}$ to the outside of the reference electrode, not causing passivation of the corrosion coupon. The operating principle of this probe is developed from the same reference electrodes available in the market.

To isolate the reference electrode of copper / copper sulphate of the soil, the porous tip of the bottom of the vessel containing the solution of the traditional copper electrode ($Cu/CuSO_4$) sulfate was replaced by a titanium plate

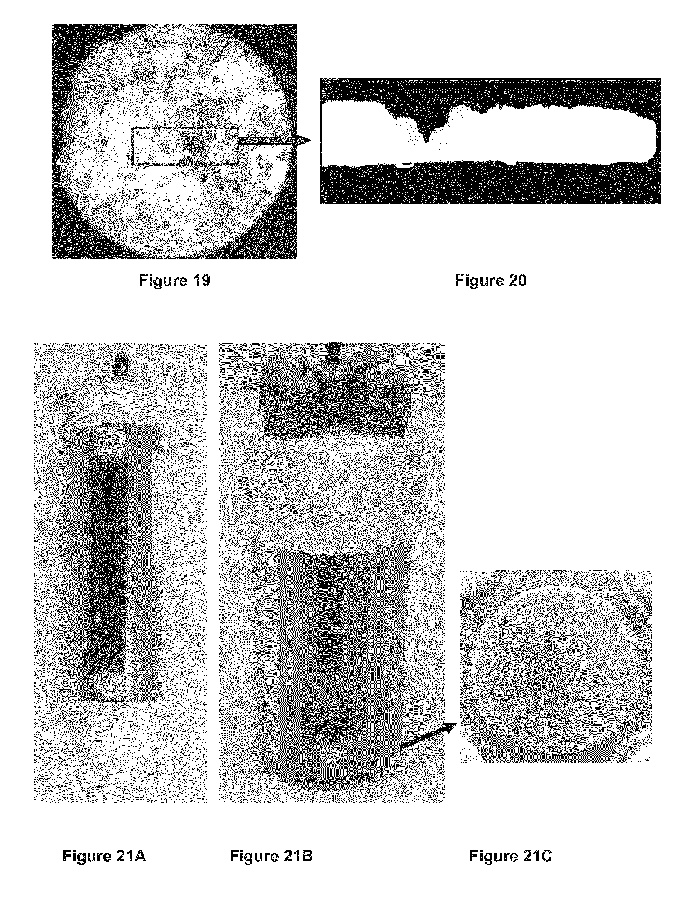

(Cu/CuSO$_4$ -Ti), as shown in Figures 21 (Fig. 21A, Figure 21B and Figure 21C).

Measurements of potential pipe / soil routinely performed by professionals working on cathodic protection take into account only the DC potential coming from the cathodic protection system itself of the duct. In areas where the ducts are free of interference currents, it is possible to perform measurements of the potential off at the switching method of the rectifier or the corrosion coupon method. In regions where the ducts are installed in locations with AC current external interference such as power substation, transmission lines and distribution of electricity, the measurement of potential pipe / soil are significantly damaged. Thus, this probe and electronic switching device is designed to measure the potential off on buried ducts in areas with interference from AC power, and get the exact potential of the metal interface.

One of the main challenges of professionals on cathodic protection is the elimination of the influence of the ohmic drop of the measures of the potential waveform. Thus, it requires obtaining the waveform of the potential off, this potential which expresses the exact potential of the interface soil/tube. To this end, we built a device that enables switching of the waveform of the resulting potential in the duct (AC + DC).

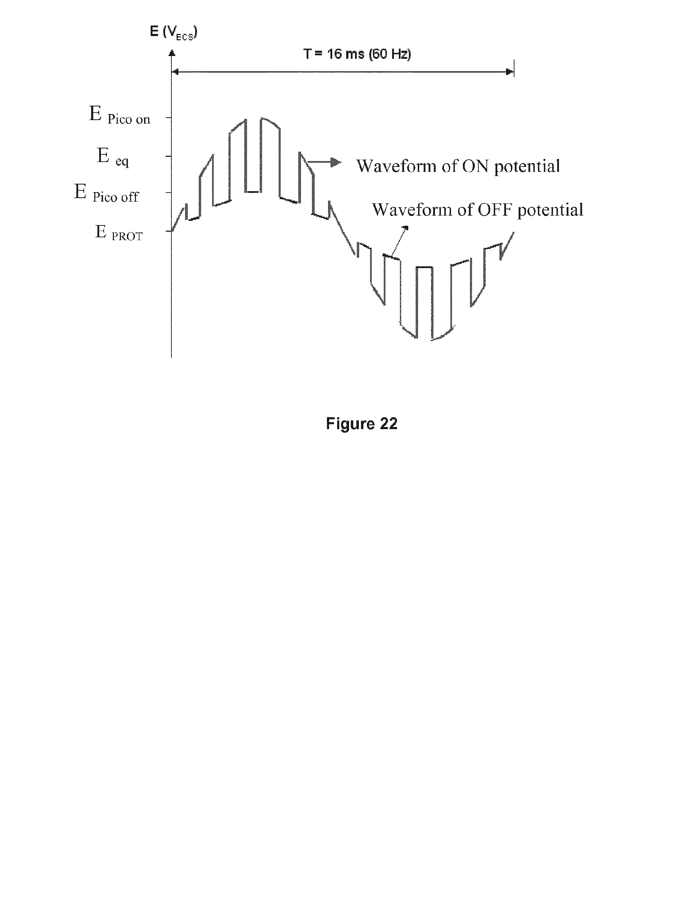

Considering a waveform of the potential of frequency of 60 Hz and the period equal to 16 ms, it requires a device capable of performing this switching at intervals of the order of 1 ms to 2 ms, as shown in Figure 22. As it can be seen in Figure 22, in a system with cathodic protection and interference from AC power, the electric potential fluctuates around an average (effective potential) value and hence the ohmic drop also varies. It is worth noting that with this device it is set up the waveform of the potential off, from which you can get the potential of the off peak and the ohmic drop of the system for each instant.

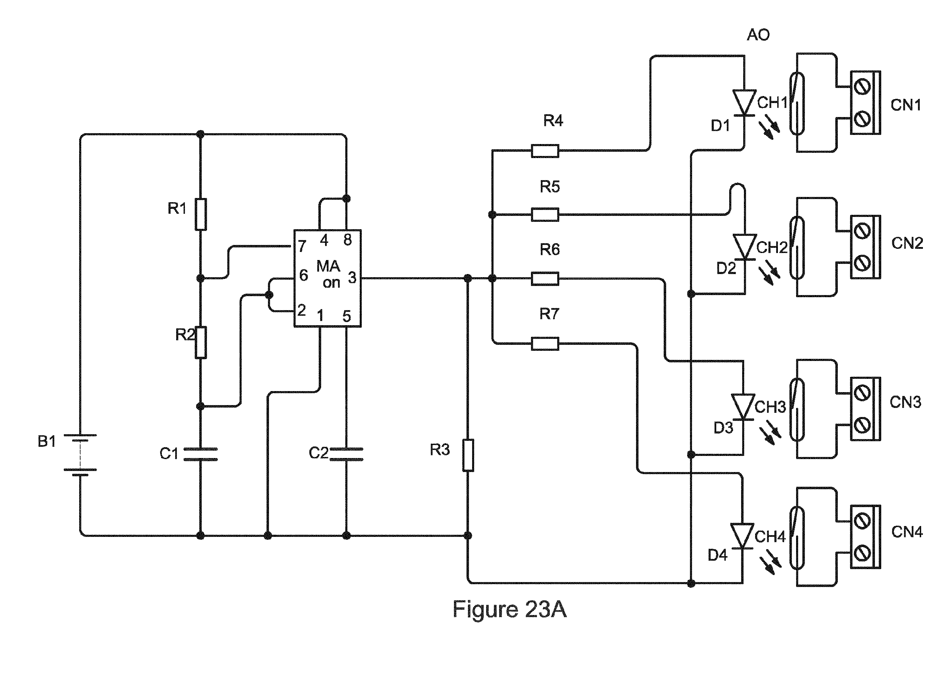

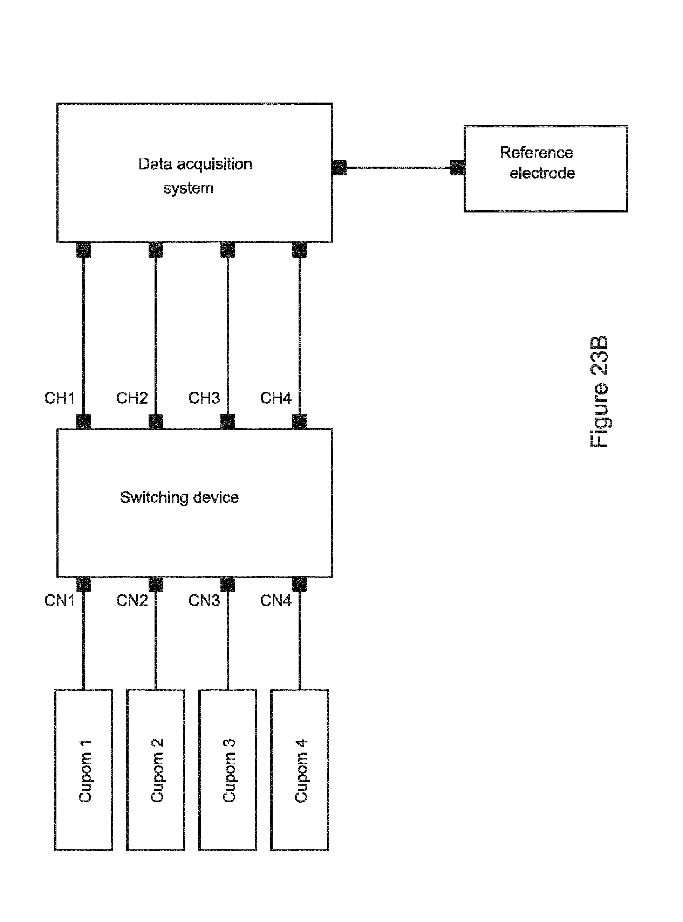

To implement this switching, it was developed the electronic circuit (multivibrator) outlined in Figure 23, where R is a resistor, C is a capacitor, MA is an astable multivibrator (integrated circuit) and AO is an optical coupler. The switching device is powered with 9V$_{DC}$.

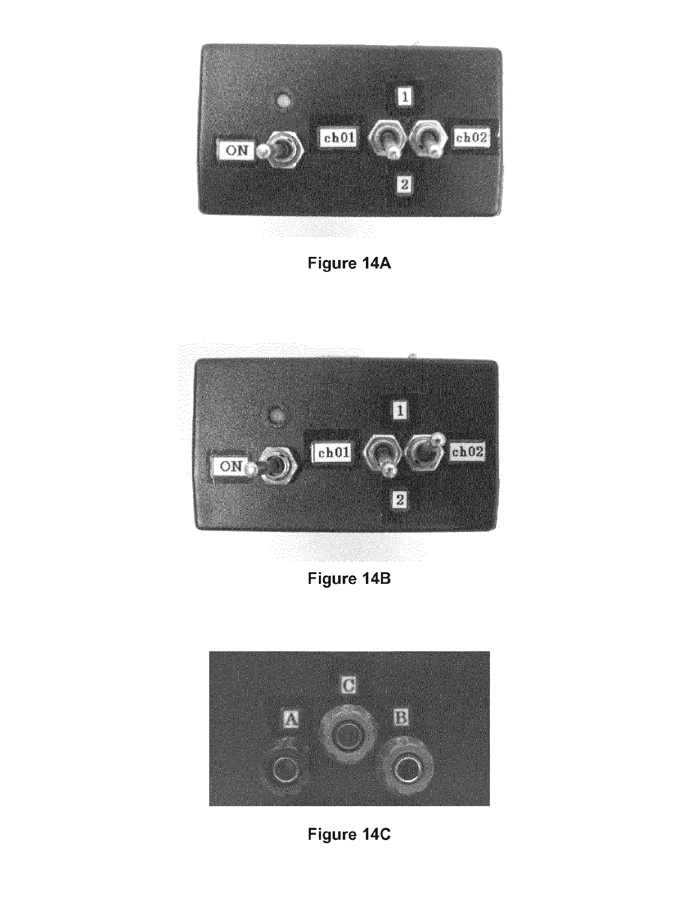

Figure 14 shows the electronic switching device with three views of the electronic switching device, wherein Figure 14A shows illustrative picture of the position of the keys of the electronic switching device for measuring the waveform of potential pipe / soil DC + AC on, Figure 14B shows illustrative picture of the position of the keys of the electronic switching device for measuring the waveform of potential pipe / soil AC + DC off and Figure 14C shows a illustrative photo of terminal connection of buried metallic structure and the reference electrode, where A = terminal of the duct interconnection, B = terminal of interconnection of the corrosion coupons, and C = terminal interconnection to the reference electrode. Measurements of the Potential pipe / soil or coupon / soil, terminals A and B shall be connected in series with the duct or the coupon and terminal C must be connected to the reference electrode.

Thermodynamics predict on the occurrence or not of corrosion by CA must be made by comparing the potential - 0.85 V$_{Ecsc}$ with potential of off peak of the coupling AC + DC, namely:

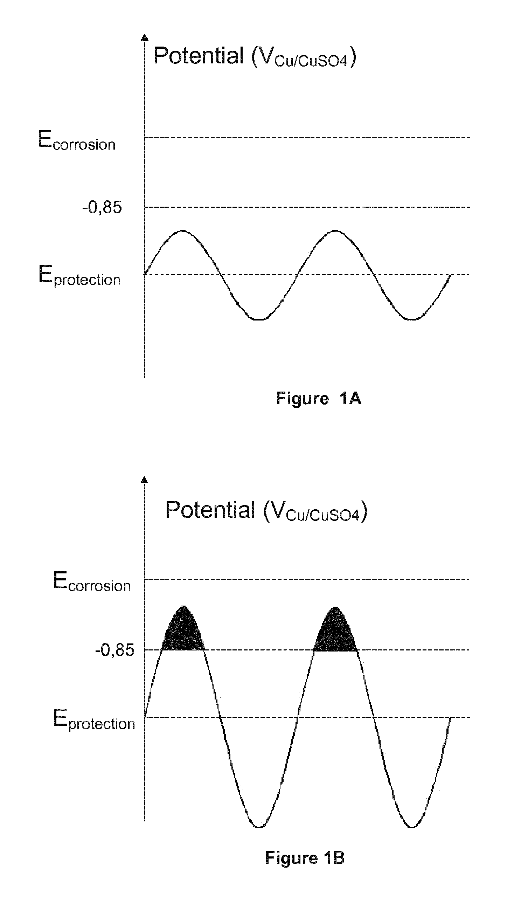

- negligible corrosion or non-occurrence of AC corrosion: peak potential waveform of the coupling AC + DC off more negative than -0.85 V$_{ECSC}$ - Condition A of Figure 1. Accordingly, the probability of corrosion of the duct is negligible or zero;
- the occurrence of corrosion CA: peak potential of the waveform of the coupling AC + CC off less negative than -0.85 V$_{ECSC}$ - Condition B of Figure 1. Under these conditions, the potential pipe / soil will be taken periodically to the corrosion domain of the Pourbaix diagram, ie, the potential pipe / soil will fluctuate between active and immune status of the Pourbaix diagram, which should cause the AC corrosion.

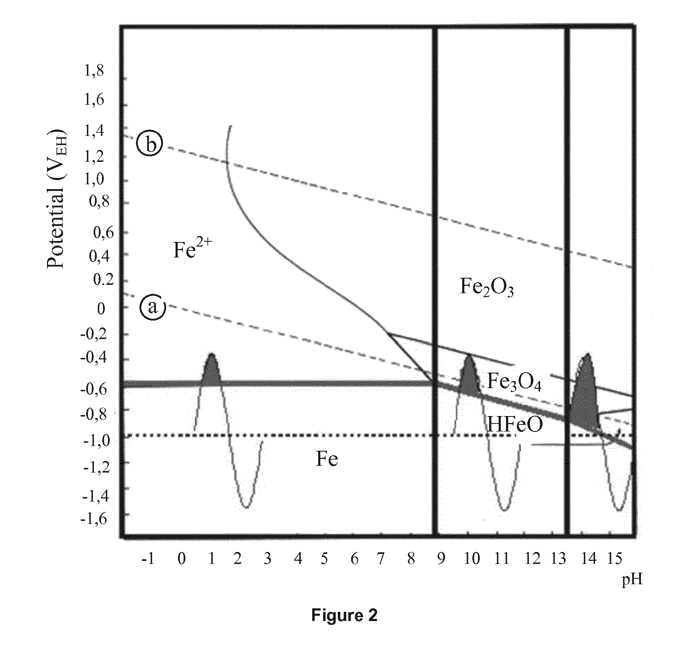

In predicting the occurrence of corrosion described by CA, it was considered that the medium in the vicinity of the defect coating where corrosion actually occurs, is acid or slightly alkaline. However, it is known that alkalization of the soil occurs at the interface due to the reduction reaction of hydrogen cations when a potential of cathodic protection is applied in a duct. Depending on the level of alkalinization, the interface pipe / soil no longer will fluctuate between active and immune status, but between the passive and immune status. If the pH reach very high values (greater than 14) during fluctuations, the potential could traverse the passive, active (field of ferrate) and immune states. Figure 2 shows the three possibilities above. Fluctuations between passive and immune status (alkaline medium with pH below 14) may cause corrosion. The corrosion caused due to fluctuations between passive, active (field of ferrate) and immune status is negligible.

In laboratory studies, it was found that the pH near the interface undergoes alkalinization when applying a potential of protection with or without the imposition of AC in steel / medium interface, and the level of this alkalinization depends on at least the following factors: the potential level of the cathodic protection, interference or not of the AC current and the level of this interference, the level of soil compaction (which restricts the exhaust gases to the atmosphere) and the composition of the medium.

Among the factors cited, the intensity of AC interference and degree of soil compaction were the most significant: the higher the CA interference and the greater the degree of soil compaction, the lower the pH stabilization.

The results were attributed to the simultaneous occurrence of reactions involving species present in water ($2H^+ + 2e \Leftrightarrow H_2$ and $2H_2O + 4e^- + O_2 \Leftrightarrow 4OH^-$) that, depending on the direction, may have alkalizing or acidifying character.

Both reactions are alkalizing towards reducing or acidifying towards oxidation. The direction of these reactions is determined by the potential of the interface metal / electrolyte. With this, it became clear that it is possible to have the three conditions mentioned above of the potential oscillation (active / immune, passive / immune and passive / active / immune).

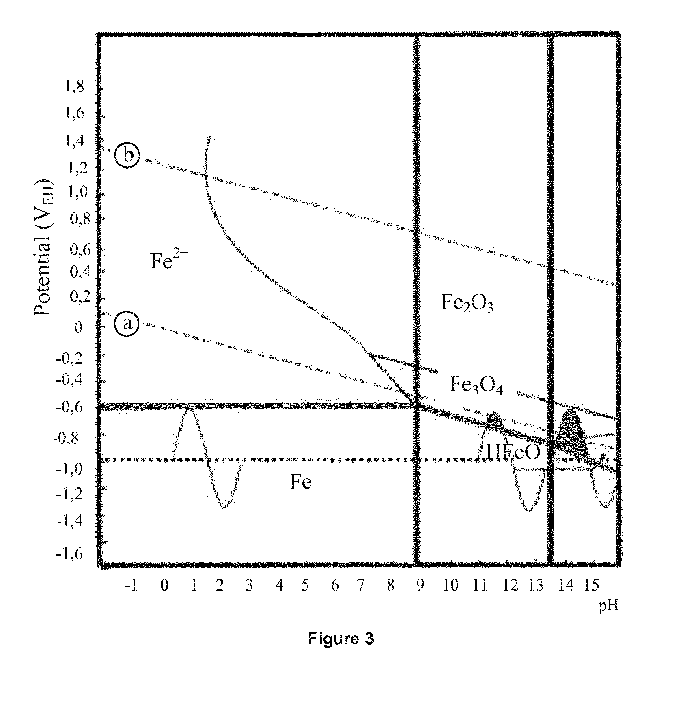

Another fact that was confirmed in the laboratory is the intensity difference of the AC corrosion as a function of pH: in the corrosion conditions (Figure 1B), the higher the pH of the interface is, the lower intensity of the corrosion. This allows to assume that the classic protection potential of -0.85 $V_{Ecsc}$ is suitable for AC interference criterion. In an extreme case, with AC interference of small amplitude (a condition which puts the system under the condition of immunity to acid or slightly alkaline medium), if alkalinization occur, the system is subject to fluctuations between the areas of immunity and passivation, which thermodynamically means that probability of occurrence of corrosion, as shown in Figure 3. However, as the amplitude of the oscillation is very small, the level of corrosion is greater and the alkalization is negligible.

The definition of the number and arrangement of coupons must take into account the elimination of the influence of the dispersed soil currents. To understand this definition, we must consider all currents captured by coupons. These currents are:

- Current from the duct via electrical cable interconnecting the coupon with the duct (test point-PTE);
- circulating currents in the soil coming from external sources than the cathodic protection (transmission lines and distribution systems, for example).

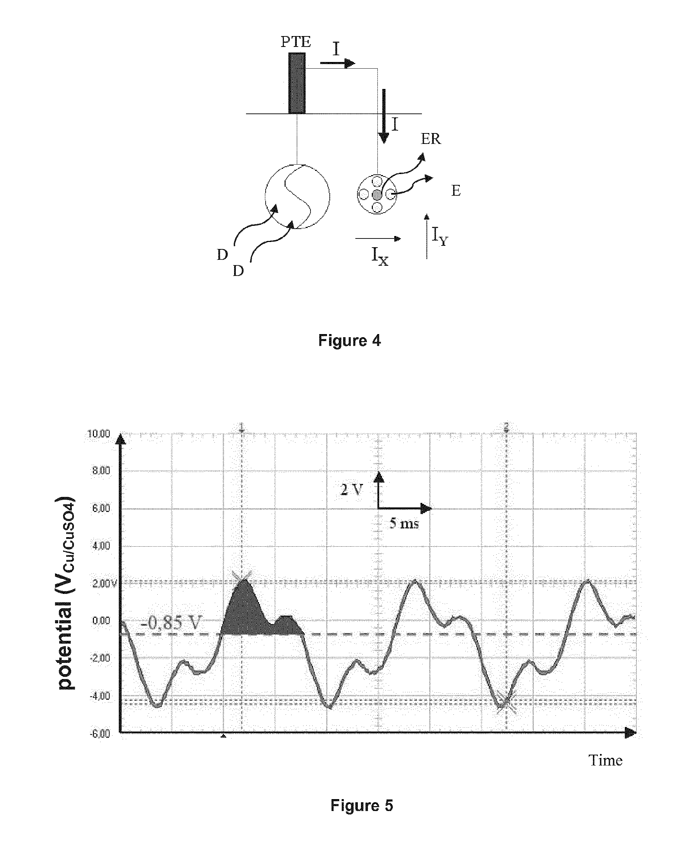

Figure 4 shows an example of a probe with four corrosion coupons positioned symmetrically in pairs with respect to the reference electrode (1 and 3 coupons orthogonal to the duct and coupons 2 and 4 parallel to the duct). In this figure, the circulating currents in the soil were represented by a Cartesian coordinate system, with $I_\chi$ Iy and components, and the circulating current between the duct and the coupon via PTE, was represented by I.

The potential of each coupon can then be represented by:

In the x direction:

$$V_1 = I.Z_0 - I_x. Z_X$$
$$V_3 = I.Z_0 + I_x. Z_X$$

In the y direction:

$$V_2 = I.Z_0 + I_Y. Z_Y$$
$$V_4 = I.Z_0 - I_Y. Z_Y$$

where:

Zo = impedance of the Coupon due to the circulating current between the duct and the coupon via test point.
Zx and Zy = impedance between the coupon and the reference electrode seen by the current dispersed in soil.

The measurement of potential pipe / soil on, the portion of potential due to the current collection dispersed in the soil by Coupon 1 (IxZx) is canceled by the portion of the potential arising from the current collection by Coupon 3 (IyZy), so that the potential on read with regard to the reference electrode refers only to the current provided from the duct via test point. The same reasoning applies to Coupon 2 and Coupon 4.

If three coupons were installed, instead of four, the potential arising from scattered currents on the soil could be voided, if the reference electrode was placed on the centroid of the triangle formed by the position of the three coupons. For simplicity of construction, we suggest a probe composed of four coupons. Eventually, it could be used two coupons arranged symmetrically with respect to the reference electrode. However, considering two values of corrosion rate are few, the choice of four coupons is preferably considered as being the most appropriate. The use of four coupons allows to monitor the direction of the current dispersed in the soil.

It is worth mentioning that the z (vertical direction) axis was not considered, because the four coupons are arranged in the same plane parallel to the soil surface.

With the developed equipment, the probe with more than one corrosion coupon, along with a digital oscilloscope or a data acquisition device with digital signal processing (DSP - Digital Signal Processing), the waveform of potential pipe / solo on AC + DC can be obtained. From this wave function is possible to extract important for monitoring the cathodic protection of buried ducts: the potential for cathodic protection (DC potential); effective AC potential on, the potential AC + DC effective on and the potential of peak of the waveform AC + DC on. Still, in parallel to the waveform of the potential, it is possible to analyze the harmonic content of the waveform and map potential sources of interference in the region of measurement. By way of illustration, Figure 5 shows an example of the waveform of the potential pipe / soil on obtained in a duct.

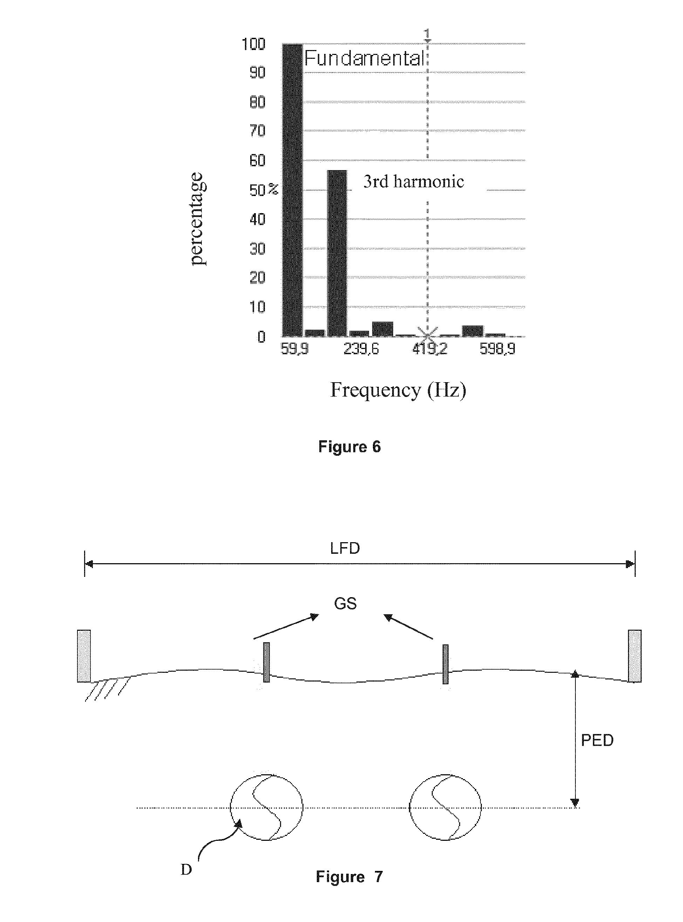

The waveform of the potential shown in Figure 5 is nothing more than the fingerprint of the potential on, that the product is subject. From this waveform, it can obtain the harmonic content and mapping potential sources of interference, as shown in Figure 6.

In general, the harmonic content has a direct relationship with the AC interference, as shown in Table 1.

Table 1 - Mapping of the AC duct interference source based on the waveform of the potential pipe / soil.

| Harmomic content | Main interference source |
|---|---|
| High component of 60 Hz and low component of 180 Hz | High voltage Transmission line (LT) |
| High component of 60 Hz and high component of 180 Hz | Electric power distribution system |
| Low component of 60 Hz and high component of 180 Hz | Electric current by means of the ground of the Electric power distribution system |
| Component of 120 Hz | Cathodically protection system |

Despite the appropriateness of the methodology, it was found experimentally that for the adoption of the criterion of thermodynamic prediction of the CA proposed corrosion is essential to obtain the waveform of potential pipe / soil AC + DC off.

The value of potential CC without the ohmic drop, for systems without interference from direct or alternating current, the potential is off, fact already well known. This value is measured interrupting the current cathodic protection and measuring the value of the potential immediately after the current interruption. So for this, it is used the same principle for obtaining the waveform of the potential AC + DC off. Thus, it was projected and built an electronic switching device capable of interrupting, in a synchronized manner, a current flowing from the ducts to the coupons via test point in time intervals of the order of milliseconds. In response to this interrupt, it is obtained the waveform of the potential tube / soil AC + DC off. From this waveform, then, it is possible to obtain the electrical parameters of interest, namely: cathodic protection potential off (DC potential); effective AC potential off, effective AC + DC potential off and the peak potential of the waveform AC + DC off.

Thermodynamic prediction on the occurrence or not of CA corrosion can then be made by comparing the peak potential of the waveform of the potential pipe / soil AC + DC off with the value -0.85 $V_{ECSC}$, according to the presented criteria.

Systematization methodology for use in the field, to evaluate the level of interference from AC and DC currents and thermodynamic prediction on the occurrence of corrosion by interference currents. Selection of parts for installation of the probes

The selection of parts for installation of the probe requires some initial considerations:

1.1 Ducts in existing tracks (consolidated facilities)

a. Find the lines of high voltage transmission and electricity distribution systems throughout range of duct. Identify the operating voltage of each line, emphasizing the parallels and intersections of lines with the ducts.

b. Lift the history of external corrosion of the duct based on the results of inspections of conducted correlation (indications of loss of external thicknesses indicated by instrumented PIG).

c. Raising the profile of the potential DC tube / soil on along the entire length of the duct using a voltmeter register.

At each measuring point, it should be raised the minimum, maximum and predominant potential. Concomitant to the DC potential pipe / soil on, it should be measured CA effective potential pipe / soil using a conventional multimeter.

d. Select the sections for installation of the probes, prioritizing data points where the largest effective CA potential pipe / soil on were obtained, in agreement with history of corrosion and proximity to electric power systems (transmission lines and distribution).

e. Install the probes in the selected regions.

1.2 Ducts under implementation

a. Find the lines of high voltage transmission and electricity distribution systems throughout the range of duct. Identify the operating voltage of each line, emphasizing the parallels and intersections of lines with the ducts. Identify the proximity of the duct to track electrified lines and other interference sources.

b. Provide the installation of the probes at points of intersection of the track of ducts with high voltage transmission lines.

2. Installation of the equipment in the field

Selecting points for installing the probe, they must be installed in accordance with the steps outlined below:

a. Identifying the point of installation of the equipment (test point, valve box, rectifier, etc.);

b. Checking how many ducts are present in the track. Locate them and flag them within the range indicating the position of the upper generatrix of each duct. Check the depth of burial (Figure 7)

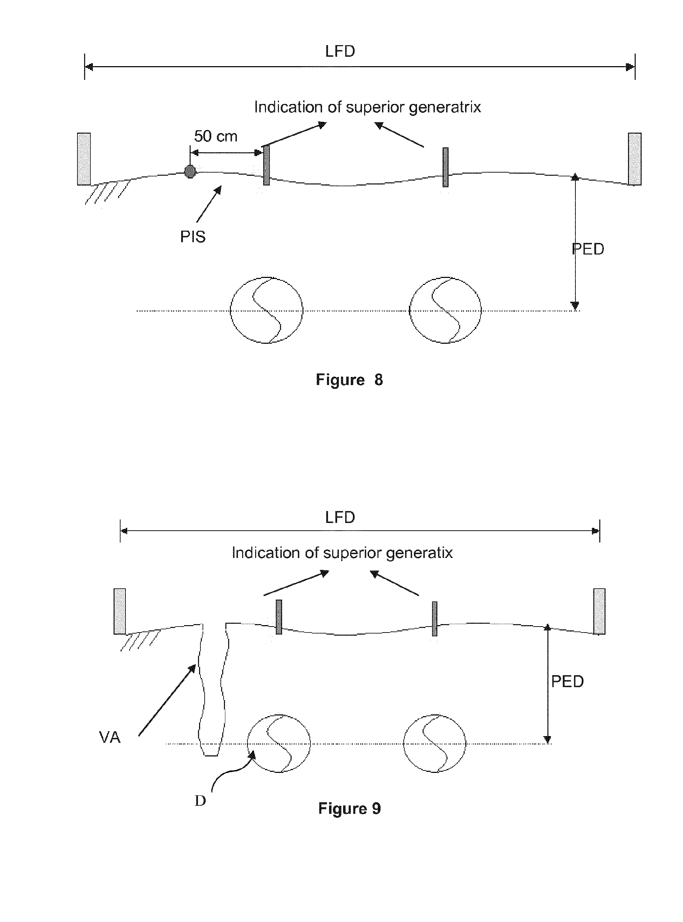

c. Installing the probe approximately 50 cm of the upper generatrix of the duct and at the same depth of burial of the duct. For this, it should make an appointment to approximately 50 cm (right or left) signaling the upper generatrix of the duct (Figure 8) and at this point, dig a trench with a depth of burial of the duct. The probe should be installed at the same level of the pipe (Figure 9).

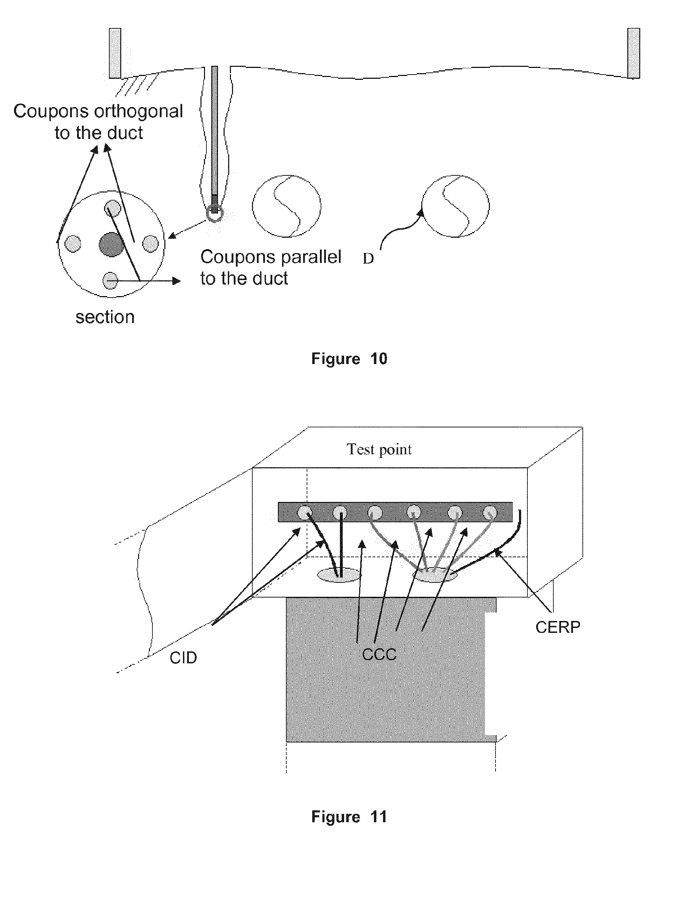

d. Starting the installation procedure of the probe soon after the opening of the trench. For this, it is recommended that the probe is attached to a pipe to direct corrosion coupons regarding the duct. This driver tube must submit the required length for the probe is installed at the level of the pipe. The set (driver pipe and probe) should be completely buried and aligned regarding the duct. Of the four corrosion coupons of the probe, two of them must be orthogonal to the duct and two of them should be parallel (Figure 10). The cables of corrosion coupons and the reference electrode is recommended to be housed within a flexible conduit toward the test point where should be taken to be connected to the duct.

e. Connecting the cables of the four corrosion coupons to the duct through the test point, and the reference electrode cable must remain isolated, as shown in Figure 11.

f. Attempting to ensure the maximum degree of soil compaction in the neighborhood during the installation of the probe. Electrical contact with the soil with corrosion coupons and metallic titanium base must be assured so that no reading error occurs. It should moisten the soil before installing the probe.

To ascertain the perfect electrical contact of corrosion coupons with the soil, it should measure the circulating CA current in each of the coupons. If no circulating CA current in some of the coupons, the probe must be removed and reinstalled adopting the same procedure.

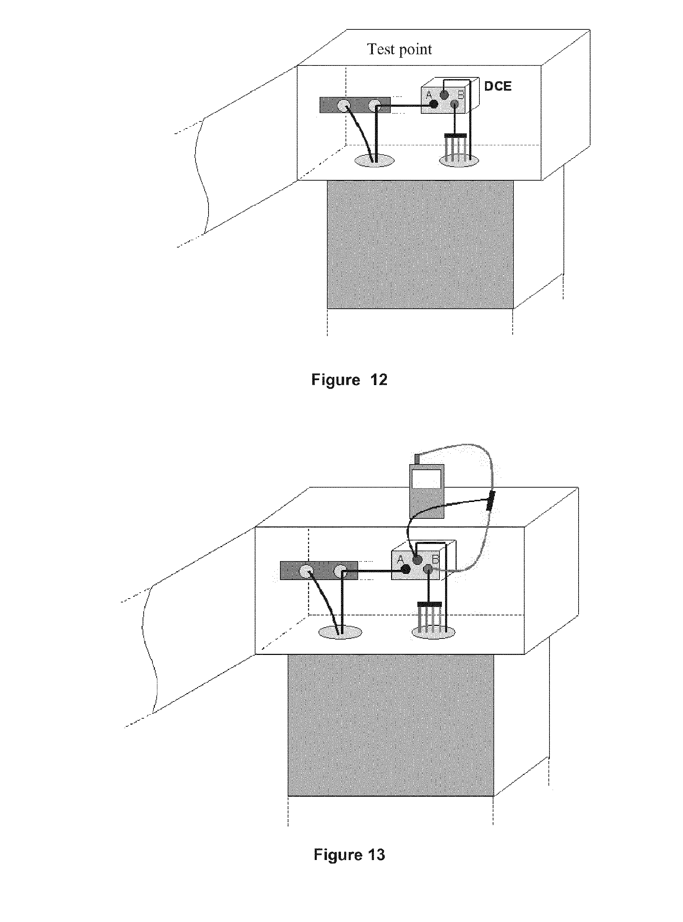

g. Continuing the installation of the electronic switching device (DCE). Since this device has the purpose of interrupting the current flowing from the duct to the coupons, the DCE should be placed in series with the duct and the four corrosion coupons already interconnected (Figure 12). It must be ensured the synchronized switching of the current in the four corrosion coupons.

3. Measurement procedure using oscilloscope or other data acquisition device

a. After installing the DCE, connecting the oscilloscope or a data acquisition device with digital signal processing (DSP - digital signal processing), to the DCE for data acquisition. For this, the connections of the oscilloscope or DSP to DCE shall conform to that shown in Figure 13. The black tip (COM) cable should be connected to the cable of the permanent reference electrode and another tip, red, must be connected to the corrosion coupons.

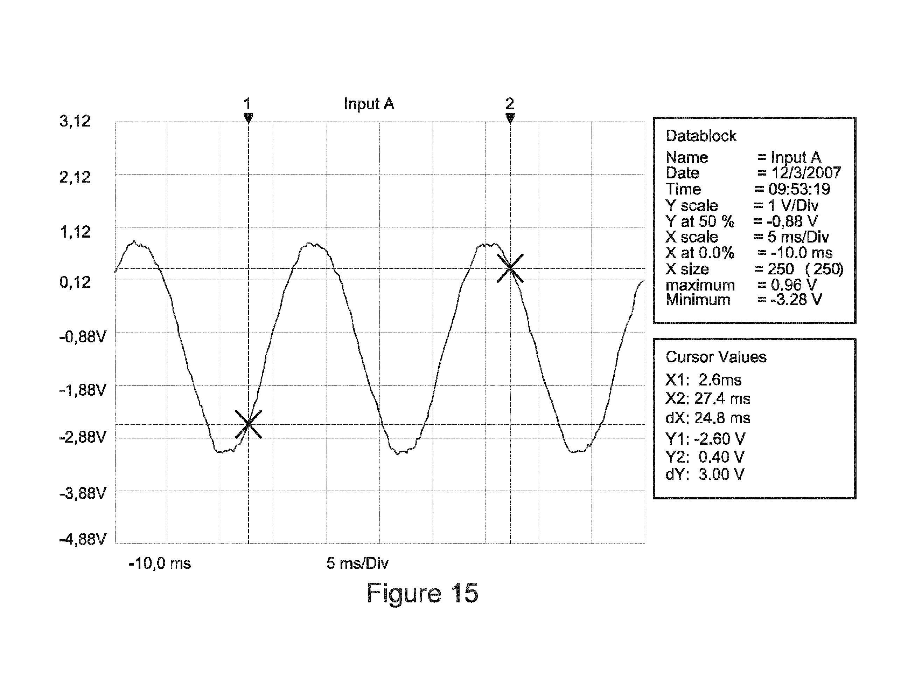

b. Turning on the oscilloscope or DSP, and adjusting the scale of the apparatus according to the level of interference in the AC measurement point, ensuring that at least one complete waveform of the potential AC + DC on. To allow current flow of the duct to the coupons, the DCE should be turned on, keeping the key ch1 off (Figure 14). The result is a waveform of potential tube / soil AC + DC on (Figure 15).

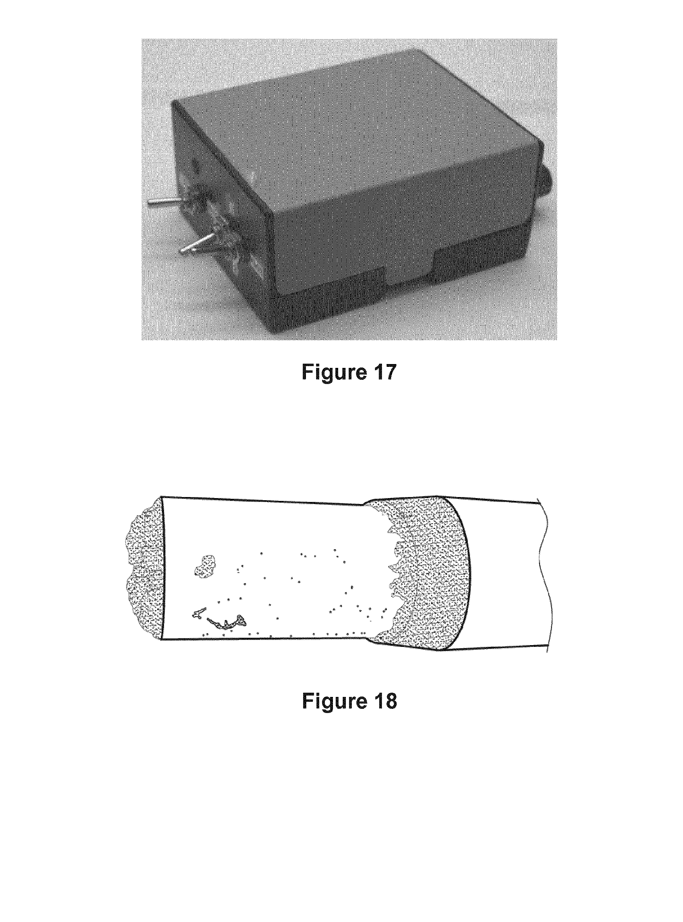

c. Performing the measurement of the shape of switched wave. For this, the key ch2 DCE should be connected in accordance with that shown in Figure 14B. To this extent, the waveform of the potential pipe / soil will be obtained AC + DC off (Figure 17), from where the information for predicting the thermodynamic probability of AC corrosion will be extracted. The results should be saved and stored in the equipment.

4 - Obtainment of the Results and analysis

The probes should be installed in the field for a minimum period of 12 months. In this period, electrical measurements must be performed at intervals of no more than 3 months. In these measurements, the waveforms of potential pipe / soil AC + DC on and off, as well as the AC current circulating in each of the corrosion coupons must be obtained.

After 12 months of installing the probe, it should be withdrawn for review and coupons shall be inspected and photographic records effected. The soil adhering to the corrosion coupons should not be removed in order to avoid a distortion of the coupons and loss of corrosion products. Figure 18 shows an example of a probe at the time of withdrawal. If it is necessary to conduct a more detailed analysis of the soil, it can be collected about 2 kg of soil sample for chemical analysis.

4.1 - Evaluation of corrosion coupons

- After removal of the coupons of the probe, they must be properly inspected and photographic records made.
- The soil adhering on the coupons should be removed with running water, using a soft bristle brush.
- A new visual analysis must be carried out and be made photographic records, reporting any damage to the corrosion coupon (adherent material, thickness loss, presence of corrosion products, occurrence of localized corrosion, etc.).

The photographic records are recommended, not mandatory.

- It should determine the loss of mass per area unit coupons and the corrosion rate. The mass loss due to corrosion (generalized) is obtained by the difference of the initial mass of the coupon and the final mass after withdrawn of the corrosion products and the corrosion rate determined by etching in a Clarke solution.
- If it is verified the occurrence of pitting corrosion, one must determine the depth of pits. For this, after the removal of corrosion products, the blasted surfaces of the coupons must be carefully examined and photographed. Then, you should identify the pits (Figure 19). For the identification of these pits, it can make use of a magnifying glass. The depth of the pits must be determined by metallographic technique, according to ASTM G 46-94 standard. Figure 20 shows the cross section of a pitting corrosion.

There are in the market microscope specifically designed for analysis of corroded surfaces, capable of providing the density of pits, and the depth of each pits.

Adjustments to equipment / devices for implementing the methodology

For monitoring processes of external corrosion on buried ducts, two devices were developed:

- A probe comprises a reference electrode of copper / copper sulphate (saturated aqueous solution of copper sulfate and copper rod of high purity equal to or greater than 99 %) with a metal base with high purity titanium, preferably greater than 99.9 %, and four corrosion coupons. The corrosion coupons are designed to simulate faults present in the anticorrosive coating of the duct. For this reason, the corrosion coupons must consist of equal or similar product to the duct, such as carbon steel COPANT 1020;
- An electronic switching device (DCE) to stop, in a synchronized manner, DC and AC currents flowing in the buried pipe for four corrosion coupons.

In the presence of alternating current in the buried pipe, the electronic switching device must be capable of performing switching at intervals of the order of milliseconds.

- the switching device comprises the electronic circuit schematized in figure 23, where R are resistors, and R1 = 10 K$\Omega$, 1 K$\Omega$ R2 = R3 = 1k$\Omega$ and R4, R5, R6 and R7 = 10 k$\Omega$ and C are capacitors, and C1 = C2 = 1nF and 1mF, MA is an astable multivibrator integrated circuit, and an optical coupler, the switching device being fed with a battery B1 of 9 VDC. The electronic switcher can consist of 1, 2, 3 or 4 channels according to the need for the interruption of current flowing through the duct toward one or more coupons.

Such equipment to guarantee the integrity of buried ducts and mitigate corrosion processes by alternating current that occur in buried pipes and additionally allow to evaluate the actual potential of cathodic protection of buried ducts.

**Claims**

1. "METHOD FOR IDENTIFICATION AND MEASUREMENT OF INTERFERENCE OF ALTERNATING CURRENTS IN BURIED DUCTS", **characterized in that** it comprises the steps of selection of parts for installation of the probes, installation of equipment in the field; measurement procedure; Obtaining of results and analysis, in which each one consists of:

   ➢ Selection of parts for installation of the probes

      a) Ducts in existing tracks (consolidated facilities)

         1. Finding the lines of high voltage transmission and electricity distribution systems throughout range duct, and identify the operating voltage of each line, emphasizing the parallels and intersections of lines with ducts;
         2. Lifting the history of external corrosion of the duct based on the results of carried out inspections correlation (indications of loss of external thicknesses indicated by instrumented PIG);
         3. Raising the profile of the DC potential pipe / soil on over the entire length of the duct, using a voltmeter register and at each measurement point, raising the minimum, maximum and predominant potential and concomitantly to the records of DC potential pipe / soil on, measuring the CA effective potential pipe / soil, using a conventional multimeter;
         4. Selecting the sections for installation of the probes, prioritizing data points where the largest effective potential pipe / soil on CA were obtained, in agreement with corrosion history and proximity to electric power systems (transmission lines and distribution);
         5. Installing the probes in the selected regions.

      b) Ducts under implementation:

         1. Finding the lines of high voltage transmission and electric power distribution systems throughout the track of the duct, identifying the proximity of the duct to track with electrified lines and other possible sources of interference and operating voltage of each of the lines, emphasizing the parallels and intersections of lines with ducts;
         2. Installing the probes at points of intersection with the range of ducts with high voltage transmission lines.

      Installation of the equipment in field

         1. Identify the point of installation of the equipment (test point, valve box, rectifier, and others);
         2. Checking the amount of products present on the strip, locate them and flag them indicating the position of the upper generatrix of each one and check the depth of burial;
         3. Installing the probe at approximately 50 cm from the upper generatrix of the pipe, making a mark to approximately 50 cm to the right or left of signaling the upper generatrix of the duct, which opens a trench to the depth of burial of the duct, so that the probe is installed at the same level of the pipe.
         4. Starting the installation procedure of the probe soon after the opening of the trench, with two corrosion coupons that must be orthogonal and two should be parallel to the duct, it is recommended that the cables from corrosion coupons and the reference electrode are housed within a flexible conduit toward the testing point, which should be taken to be connected to the duct.
         5. Connecting the cables of the four corrosion coupons to the duct through the test point, and the reference electrode cable must remain isolated.
         6. Ensuring the maximum degree of soil compaction in the vicinity of the probe and the electrical contact with the soil corrosion coupons and metallic titanium base.

7. Continuing the installation of the electronic switching device (DCE) putting it in series with the duct and the four corrosion coupons, already interconnected, assuring the synchronized switching of the current in the four corrosion coupons.

➢ Measurement Procedure

1. After installing the DCE, connecting the oscilloscope or a data acquisition device with digital signal processing (DSP - digital signal processing), the DCE for data acquisition, so that the "COM" terminal of the multimeter is connected to cable of the permanent reference electrode and the other end connected to the corrosion coupons.

2. Turning on the oscilloscope or the DSP, and adjusting the scale of the apparatus according to the levels of AC interference on measurement point, ensuring that at least one complete waveform of the potential AC + DC on is obtained.

3. Adjusting the scale of the device according to the levels of AC interference in the measuring point, ensuring that at least one complete waveform of the potential AC + DC off is obtained, and results should be saved and stored in the equipment.

➢ Getting Results and analysis

1. The probes should be installed in the field for a minimum of 12 months and the electrical measurements must be performed in time intervals of up to 3 months to give the waveforms of the potentials pipe / soil AC + DC on and off, as well as the AC current circulating in each of corrosion coupons.

2. After 12 months of installing the probe, removing it to inspect and review the coupons making photographic records, and the soil adhering to the corrosion coupons should not be removed in order to avoid a distortion of the coupons and the loss of corrosion products.

3. Evaluation of corrosion coupons

• After removing the coupons from the probe, they must be properly inspected and made photographic records.

• The soil adhering on the coupons should be removed with washing in running water, using a soft bristle brush.

• Making a new visual analysis with photographic records, reporting any damage to the corrosion coupon.

• Determining the weight loss per unit area of the coupons and the corrosion rate, and the mass loss due to corrosion obtained by the difference of the initial mass of the Coupon and the final mass after removal of the corrosion products and the corrosion rate determined by etching in Clarke solution.

• If it is verified the occurrence of pitting corrosion, determining the depth of pits by metallographic technique according to ASTM G 46-94 or alternatively, specially designed for the analysis of corroded surfaces, capable of providing the density and depth microscopes each of the pits.

2. "METHOD FOR IDENTIFICATION AND MEASUREMENT OF INTERFERENCE IN alternating currents buried ducts", according to claim 1, **characterized in that**, in the installation stage of the equipment in the field, the probe is attached to a pipe length required for the said probe is installed at the level of the pipe to direct corrosion coupons regarding the duct, obtaining the whole tube driver and completely buried probe and aligned relative to the duct.

3. "METHOD FOR IDENTIFICATION AND MEASUREMENT OF INTERFERENCE OF ALTERNATING CURRENTS IN BURIED DUCTS", according to claim 1, **characterized in that** the step of installing the equipment in the field, in case the probe has two coupons, one must be orthogonal and the other parallel to the duct.

4. "METHOD FOR IDENTIFICATION AND MEASUREMENT OF INTERFERENCE OF ALTERNATING CURRENTS IN BURIED DUCTS ", according to claim 1, **characterized in that** the step of installing the equipment in the field, moistening the soil prior to installation of the probe to make electrical contact with the soil corrosion coupons and with the titanium base metal.

5. "METHOD FOR IDENTIFICATION AND MEASUREMENT INTERFERENCE IN ALTERNATING CURRENTS BURIED DUCTS", according to claim 1, **characterized in that**, in the step of obtaining the results and analysis, if necessary performing a more detailed analysis of the soil to collect about 2 kg of soil sample for chemistry analysis.

6. "METHOD FOR IDENTIFICATION AND MEASUREMENT OF INTERFERENCE OF ALTERNATING CURRENTS IN BURIED DUCTS", according to claim 1, **characterized in that**, in the step of achieving results and analysis, photographic records are not required.

7. "EQUIPMENT FOR IDENTIFICATION AND MEASUREMENT OF INTERFERENCE OF ALTERNATING CURRENTS IN BURIED DUCTS", **characterized in that** it consists of two devices, one being a probe comprising a reference electrode of copper / copper sulfate with a metallic titanium base high of high purity with four corrosion coupons, and the other being an electronic switching device (DCE) to stop, in a synchronized manner, DC and AC currents flowing from the pipe buried for four corrosion coupons, with ability to perform switching at intervals of order of one or two milliseconds, this switching device being connected to a digital oscilloscope or other data acquisition device.

8. "DEVICE FOR MEASURING AND IDENTIFICATION OF INTERFERENCE IN ALTERNATING CURRENTS BURIED DUCTS", according to claim 7, **characterized in that** the reference electrode consists of a saturated aqueous solution of copper sulfate and copper rod having purity of greater than 99 %, the titanium plate having purity equal to or greater than 99.9 % and coupons are made of the same or similar to the material of the duct material.

9. "EQUIPMENT FOR IDENTIFICATION AND MEASUREMENT OF INTERFERENCE OF ALTERNATING CURRENTS IN BURIED DUCTS", according to claim 8, **characterized in that** the coupon material is carbon steel COPANT 1020.

10. "DEVICE FOR MEASURING AND IDENTIFICATION OF INTERFERENCE IN ALTERNATING CURRENTS BURIED DUCTS", according to claim 7, **characterized in that** the switching device is constituted by the electronic circuit schematized in figure 23, where R are resistors, and R1 = 10 kΩ, R2 = 1 KΩ, 1 KΩ, and R3 = R4, R5, R6 and R7 = 10 kΩ and C are capacitors being C1 = 1 nF and C2 = 1 mF, MA is an astable multivibrator integrated circuit, and an optical coupler, the switching device being fed with a 9 VDC battery B1, and electronic switcher can consist of 1, 2,3 or 4 channels according to the need for the interruption of current flowing through the duct toward one or more coupons.

Figure 1A

Figure 1B

Figure 2

**Figure 3**

Figure 4

Figure 5

**Figure 6**

**Figure 7**

LFD

Indication of superior generatrix

50 cm

PIS

PED

**Figure 8**

LFD

Indication of superior generatix

PED

VA

D

**Figure 9**

Coupons orthogonal
to the duct

Coupons parallel  D
to the duct

section

Figure 10

Test point

CID

CCC

CERP

Figure 11

Figure 12

Figure 13

Figure 14A

Figure 14B

Figure 14C

Figure 15

Figure 16

Figure 17

Figure 18

Figure 19

Figure 20

Figure 21A

Figure 21B

Figure 21C

**Figure 22**

Figure 23A

Figure 23B

# EP 2 757 306 A1

## INTERNATIONAL SEARCH REPORT

| International application No. |
|---|
| PCT/BR2012/000166 |

### A. CLASSIFICATION OF SUBJECT MATTER

**F17D5/08 (2006.01)**

According to International Patent Classification (IPC) or to both national classification and IPC

### B. FIELDS SEARCHED

Minimum documentation searched (classification system followed by classification symbols)

**IPC F17D**

Documentation searched other than minimum documentation to the extent that such documents are included in the fields searched

Electronic data base consulted during the international search (name of data base and, where practicable, search terms used)

**EPODOC**

### C. DOCUMENTS CONSIDERED TO BE RELEVANT

| Category* | Citation of document, with indication, where appropriate, of the relevant passages | Relevant to claim No. |
|---|---|---|
| A | CN 101392870 A (WUHAN HIGH VOLTAGE RES INST [CN] ) <br> 25 March 2009 (2009-03-25) | |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03/10/2012** | **101012** |

| Name and mailing address of the ISA/ BR <br> INSTITUTO NACIONAL DA PROPRIEDADE INDUSTRIAL <br> Rua Sao Bento nº 1, 17º andar <br> cep: 20090-010, Centro - Rio de Janeiro/RJ <br> Facsimile No.   +55 21 3037-3663 | Authorized officer <br> **Marcelo Ricardo A. C. Tredinnick** <br><br> Telephone No.   +55 21 3037-3493/3742 |

Form PCT/ISA/210 (second sheet) (July 2009)

29

INTERNATIONAL SEARCH REPORT
Information on patent family members

International application No.

PCT/BR2012/000166

| CN 101392870 A | 2009-03-25 | CN 101392870 B | 2010-05-12 |
|---|---|---|---|

Form PCT/ISA/210 (patent family annex) (July 2009)